# EUROPÄISCHE PATENTSCHRIFT

(11) **EP 2 247 872 B1**
(45) Veröffentlichungstag und Bekanntmachung des Hinweises auf die Patenterteilung: **25.04.2012**
(21) Anmeldenummer: 09702601.7
(22) Anmeldetag: 15.01.2009
(51) Int. Cl.: F16F 15/173

(54) **VISKOSEDREHSCHWINGUNGSDÄMPFER ODER VISKOSEDREHSCHWINGUNGSSTILGER ZUR REDUZIERUNG VON TORSIONSSCHWINGUNGEN**
VISCOUS TORSIONAL VIBRATION DAMPER OR VISCOUS TORSIONAL VIBRATION INSULATOR FOR REDUCING TORSIONAL VIBRATIONS
AMORTISSEUR DE VIBRATIONS VISQUEUX OU ANTIVIBRATEUR VISQUEUX POUR RÉDUIRE LES VIBRATIONS DE TORSION

(30) Priorität: 17.01.2008 DE 102008004793
(43) Veröffentlichungstag der Anmeldung: 10.11.2010
(73) Patentinhaber: Hasse & Wrede GmbH, 12681 Berlin (DE); KNORR-BREMSE Systeme für Nutzfahrzeuge GmbH, 80809 München (DE)
(72) Erfinder: KIENER, Wolfgang, 92431 Neunburg vorm Wald (DE); KNOPF, Florian, 14199 Berlin (DE); HITZIGER, Hubert, 67549 Worms (DE)
(74) Vertreter: Mattusch, Gundula
(86) Internationale Anmeldenummer: PCT/EP2009/000198
(87) Internationale Veröffentlichungsnummer: WO 2009/090058

(56) Entgegenhaltungen:
- DE-A1- 10 301 707
- US-A- 6 111 404

## Beschreibung

Die vorliegende Erfindung betrifft einen Viskosedrehschwingungsdämpfer oder Viskosedrehschwingungstilger zur Reduzierung von Torsionsschwingungen an der Kurbelwelle eines Hubkolbenmotors, wobei zur Kühlung des Viskosedrehschwingungsdämpfers oder Viskosedrehschwingungstilgers an dessen Gehäuse eine Lüfterscheibe mit einer Vielzahl von schaufel- oder flügelartigen Erhebungen angeordnet ist, die als Signalgeber für einen Sensor zur Ermittlung der jeweils aktuellen Winkelstellung der Kurbelwelle ausgebildet und mit einer hierfür erforderlichen, exakten Teilung der Erhebungen versehen ist.

Viskosedrehschwingungsdämpfer oder Viskosedrehschwingungstilger der gattungsgemäßen Art sind an sich bekannt, z.B. aus der DE 103 01 707 A1. Derartige Dämpfer oder Tilger werden benutzt, um Torsionsschwingungen an Kurbelwellen von Hubkolbenmotoren zu reduzieren, wobei innerhalb des Gehäuses derartiger Dämpfer oder Tilger Schwungringe oder Schwungmassen, in einem Dämpfungsöl, vorzugsweise Silikonöl gelagert sind.

Da sich derartige Dämpfer oder Tilger durch die im Betrieb auftretende Reibung sehr stark erwärmen, werden zur Kühlung die angesprochenen Lüfterscheiben an den Gehäusen montiert. Durch deren Erhebungen wird bei der Rotation ein Luftstrom erzeugt, der die angestrebte Kühlung des Dämpfers oder Tilgers bewirkt.

Eine weitere Notwendigkeit für die Steuerung eines Hubkolbenmotors ist die Erkennung der jeweiligen Winkelstellung der Kurbelwelle.

Um dies zu erreichen, sind bislang separat an eine Kurbelwelle angebrachte Zahn- oder Lochscheiben vorgesehen, die über einen Sensor abgetastet werden, um die jeweilige Winkelstellung der Kurbelwelle zu ermitteln. Als Sensortypen kommen z.B. Hallgeber oder Induktivaufnehmer zum Einsatz. Die angesprochenen Zahn- oder Lochscheiben werden als präzise Inkrementalscheiben auf der Kurbelwelle appliziert und zur Motorsteuerung genutzt. Auch ist es üblich, durch aufwendige mechanische Bearbeitung entsprechende Signal-Nuten oder -Bohrungen im Schwungrad des Motors vorzusehen.

Für den Notbetrieb werden redundante Geberscheiben z.B. auf der Nockenwelle eines Hubkolbenmotors, insbesondere bei Nutzfahrzeug-Motoren oder auf der Kurbelwelle eingesetzt.

Bei einer Lüfterscheibe mit einer exakten Teilung der Erhebungen kann diese auch als Signalgeber für einen Sensor zur Ermittlung der jeweils aktuellen Winkelstellung der Kurbelwelle genutzt werden.

Der vorliegenden Erfindung liegt die Aufgabe zugrunde, einen Dämpfer oder Tilger der gattungsgemäßen Art dahingehend weiterzuentwickeln, dass auch eine für die Steuerung eines Hubkolbenmotors erforderliche Ermittlung einer bevorzugten Drehwinkelstellung möglich ist.

Diese Aufgabe wird erfindungsgemäß dadurch gelöst, dass die Lüfterscheibe mit einer in ihrer geometrischen Ausgestaltung von den übrigen Erhebungen abweichend gestalteten Erhebung versehen und die Lüfterscheibe derart an der Kurbelwelle befestigt ist, dass die Erfassung dieser hervorgehobenen Erhebung gegenüber den übrigen Erhebungen eine besondere Winkelstellung der Kurbelwelle, vorzugsweise eine Totpunktlage, signalisiert.

Durch diese abweichend von den übrigen Erhebungen gestaltete Erhebung kann beispielsweise eine Totpunktlage der Kurbelwelle erkannt werden, vorausgesetzt, dass die Lüfterscheibe derart an einer Kurbelwelle montiert ist, dass diese hervorgehobene Erhebung bei Erreichen einer Totpunktlage im Erfassungsbereich des Sensors liegt.

Die Erhebungen der Lüfterscheibe können sowohl durch Einprägungen wie auch durch Ausstellen teilweise aus der Lüfterscheibe ausgestanzter Materialabschnitte gebildet sein.

Weitere Merkmale der Erfindung sind Gegenstand weiterer Unteransprüche.

Ein bevorzugtes Ausführungsbeispiel der Erfindung ist in den beigefügten Zeichnungen dargestellt und wird im Folgenden näher beschrieben.

Es zeigen:
- Figur 1: eine perspektivische Teildarstellung einer Kurbelwelle eines Hubkolbenmotors mit einem Viskosedrehschwingungsdämpfer
- Figur 2: eine perspektivische Darstellung des Viskosedrehschwingungsdämpfers gemäß Figur 1
- Figur 3: eine perspektivische Halbschnitt-Darstellung des Viskosedrehschwingungsdämpfers

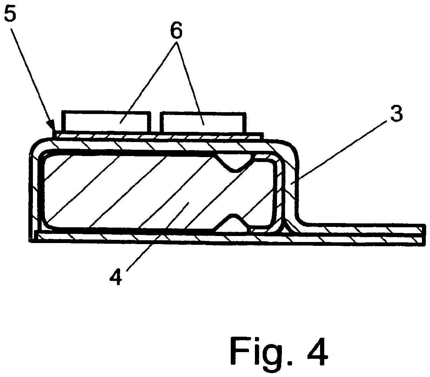

- Figur 4: einen Halbschnitt durch den Viskosedrehschwingungsdämpfer gemäß den Figuren 1 bis 3.

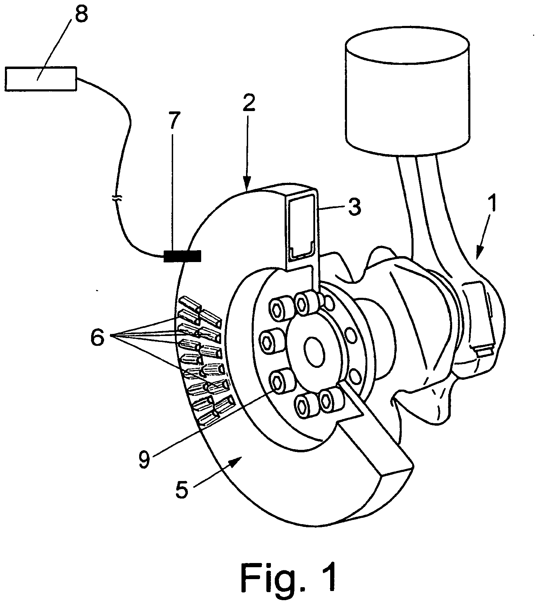

In Figur 1 ist mit dem Bezugszeichen 1 eine nur teilweise dargestellte Kurbelwelle eines Hubkolbenmotors bezeichnet, an der in an sich bekannter Weise ein Viskosedrehschwingungsdämpfer 2 befestigt ist.

Dieser Viskosedrehschwingungsdämpfer 2 weist ein Gehäuse 3 auf, in dem an sich bekannter Weise ein Schwungring 4 in einem Dämpfungsöl, vorzugsweise Silikonöl gelagert ist.

Der Viskosedrehschwingungsdämpfer 2 ist über Verbindungselemente 9 mit der Kurbelwelle fest verbunden.

Außenseitig ist an dem Gehäuse 3 eine Lüfterscheibe 5 befestigt, die eine Vielzahl von Erhebungen 6 bzw. 6a aufweist. Durch diese Erhebungen 6 bzw. 6a wird ein Kühleffekt für den Viskosedrehschwingungsdämpfer 2 bei Betrieb der Kurbelwelle 1 bewirkt.

Wie insbesondere aus Figur 1 hervorgeht, ist der Lüfterscheibe 5 mit ihren Erhebungen 6 bzw. 6a gegenüberliegend ein Sensor 7 einer nicht weiter detailliert dargestellten Motorsteuerung 8 angeordnet.

Die Erhebungen 6 bzw. 6a sind in einer exakten Winkelteilung an der Lüfterscheibe 5 angebracht, so dass diese Erhebungen 6 bzw. 6a durch den Sensor 7 eine exakte Bestimmung der jeweils aktuellen Winkelstellung der Kurbelwelle 1 ermöglichen.

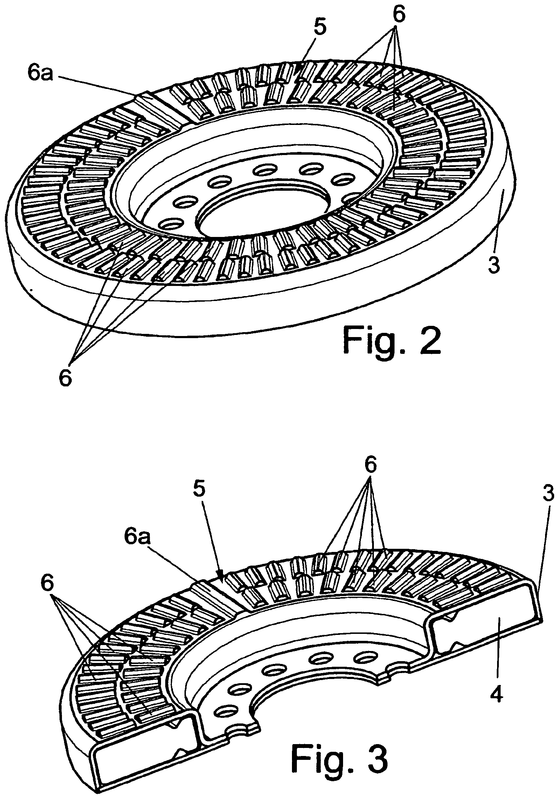

Die Figuren 2 und 3 machen deutlich, dass eine mit dem Bezugszeichen 6a bezeichnete Erhebung vorgesehen ist, die sich von den übrigen Erhebungen 6 der Lüfterscheibe 5 durch eine geometrisch abweichende Gestaltung auszeichnet. Im dargestellten Ausführungsbeispiel erstreckt sich die Erhebung 6a über die gesamte Ringbreite der Lüfterscheibe 5, wohingegen die übrigen Erhebungen 6a jeweils in Radialrichtung unterbrochen sind. Die hiervon abweichende, nicht unterbrochene Erhebung 6a kann, wenn diese in einer dafür erforderlichen Lage relativ zur Kurbelwelle 1 montiert ist, dem Geber 7 beispielsweise eine obere oder eine untere Totpunktlage der Kurbelwelle 1 signalisieren.

Die Erhebungen 6 bzw. 6a können sowohl durch Einprägungen wie auch durch Ausstellen von teilweise aus dem Material der Lüfterscheibe 5 ausgestanzten Materialabschnitten gebildet sein.

Bevorzugt ist die Lüfterscheibe 5 aus Metall gefertigt.

Die Lüfterscheibe 5 ist an sich bekannter Weise mit dem Gehäuse 3 verbunden.

In dem dargestellten Ausführungsbeispiel ist ein Viskosedrehschwingungsdämpfer erläutert worden. Die gleichen Vorteile bei gleicher Konstruktion der Lüfterscheibe 5 ergeben sich aber auch bei einem Viskosedrehschwingungstilger.

Die entsprechend gestaltete Lüfterscheibe 5 kann sowohl als präziser Inkrementalgeber für die Motorsteuerung 8 wie auch als redundante Geberscheibe für den Notbetrieb genutzt werden.

Das über den Sensor 7 ermittelte Signal kann auch zur Messung der Torsionsschwingungen der Kurbelwelle 1 genutzt werden, so dass sowohl der Hubkolbenmotor wie auch ein Dämpfer oder Tilger überwacht werden kann.

## Patentansprüche

1. Viskosedrehschwingungsdämpfer oder Viskosedrehschwingungstilger (2) zur Reduzierung von Torsionsschwingungen an der Kurbelwelle (1) eines Hubkolbenmotors, wobei zur Kühlung des Viskosedrehschwingungsdämpfers oder Viskosedrehschwingungstilgers (2) an dessen Gehäuse (3) eine Lüfterscheibe (5) mit einer Vielzahl von schaufel- oder flügelartigen Erhebungen (6, 6a) angeordnet ist, die als Signalgeber für einen Sensor (7) zur Ermittlung der jeweils aktuellen Winkelstellung der Kurbelwelle (1) ausgebildet und mit einer hierfür erforderlichen, exakten Teilung der Erhebungen (6, 6a) versehen ist, **dadurch gekennzeichnet, dass** die Lüfterscheibe (5) mit einer in ihrer geometrischen Ausgestaltung von den übrigen Erhebungen (6) abweichend gestalteten Erhebung (6a) versehen und die Lüfterscheibe (5) derart an der Kurbelwelle (1) befestigt ist, dass die Erfassung dieser hervorgehobenen Erhebung (6a) gegenüber den übrigen Erhebungen (6) eine besondere Winkelstellung der Kurbelwelle (1), vorzugsweise eine Totpunktlage, signalisiert.

2. Viskosedrehschwingungsdämpfer oder Viskosedrehschwingungstilger nach Anspruch 1, **dadurch gekennzeichnet, dass** die Erhebungen (6, 6a) durch Ausprägungen der Lüfterscheibe (5) gebildet sind.

3. Viskosedrehschwingungsdämpfer oder Viskosedrehschwingungstilger nach Anspruch 1, **dadurch gekennzeichnet, dass** die Erhebungen (6, 6a) durch Ausstellen von teilweise aus dem Material der Lüfterscheibe (5) ausgestanzten Bereichen gebildet sind.

4. Viskosedrehschwingungsdämpfer oder Viskosedrehschwingungstilger nach einem der vorhergehenden Ansprüche, **dadurch gekennzeichnet, dass** die Lüfterscheibe (5) aus Metall gefertigt ist.

5. Viskosedrehschwingungsdämpfer oder Viskosedrehschwingungstilger nach einem der vorhergehenden Ansprüche, **dadurch gekennzeichnet, dass** die Lüfterscheibe (5) verdrehsicher am Gehäuse (3) befestigt ist.

6. Viskosedrehschwingungsdämpfer oder Viskosedrehschwingungstilger nach einem der vorhergehenden Ansprüche, **dadurch gekennzeichnet, dass** der Viskosedrehschwingungsdämpfer oder Viskosedrehschwingungstilger nur in einer ganz bestimmten Position mit der Kurbelwelle durch die Verbindungselemente (9) verbindbar ist.

## Claims

1. Viscous torsional vibration damper or viscous torsional vibration absorber (2) for reducing torsional vibrations on the crankshaft of a reciprocating piston engine, wherein a ventilator disc (5) provided with a plurality of blade-like or wing-like peaks (6, 6a) is disposed on the housing (3) of the viscous torsional vibration damper or viscous torsional vibration insulator (2) for cooling the latter, which disc is designed as signal generator for a sensor (7) for determining the respective current angular position of said crankshaft (1) and is provided with a precise pitch of said peaks (6, 6a), which is necessary to this end, **characterised in that** said ventilator disc (5) is provided with a peak (6a) designed at variance from the remaining peaks (6) in terms of its geometric configuration and that said ventilator disc (5) is so fastened on said crankshaft (1) that the detection of this emphasised peak (6a) relative to the remaining peaks (6) signals a particular angular position of said crankshaft (1), preferably a dead-centre position.

2. Viscous torsional vibration damper or viscous torsional vibration absorber according to Claim 1, **characterised in that** said peaks (6, 6a) are formed by moulding of said ventilator disc (5) outward.

3. Viscous torsional vibration damper or viscous torsional vibration absorber according to Claim 1, **characterised in that** said peaks (6, 6a) are formed by flaring outward sections partly punched out of the material of said ventilator disc (5).

4. Viscous torsional vibration damper or viscous torsional vibration absorber according to any of the preceding Claims, **characterised in that** said ventilator disc (5) is made of metal.

5. Viscous torsional vibration damper or viscous torsional vibration absorber according to any of the preceding Claims, **characterised in that** said ventilator disc (5) is fastened on said housing (3) in a manner preventing torsion.

6. Viscous torsional vibration damper or viscous torsional vibration absorber according to any of the preceding Claims, **characterised in that** the viscous torsional vibration damper or viscous torsional vibration absorber is adapted to be connected by means of the connecting elements (9) to said crankshaft only in a very specific position.

## Revendications

1. Amortisseur visqueux de vibrations de torsion ou dispositif anti-vibrateur visqueux (2) à réduire des vibrations de torsion sur le vilebrequin of a moteur à piston alternatif, dans lequel un disque ventilateur (5), muni d'une pluralité des bosses similaires à des pales ou ailes (6, 6a) est disposée sur le carter (3) de l'amortisseur visqueux de vibrations de torsion ou dispositif anti-vibrateur visqueux (2) afin de refroidir le dernier, ce disque étant conçu en tant qu'un générateur de signaux pour un détecteur (7) afin de détecter la position angulaire actuelle respective dudit vilebrequin (1) et étant muni d'un écartement précis entre lesdites bosses (6, 6a), qui est nécessaire à cette fin, **caractérisé en ce que** ledit disque ventilateur (5) est pourvu d'une bosse (6a) conçue en variation des autres bosses (6) en ce qui concerne sa configuration géométrique, et **en ce que** ledit disque ventilateur (5) est fixé audit vilebrequin (1) d'une telle manière, que la détection de cette bosse accentuée (6a) relative aux autres bosses (6) signale une position angulaire particulière dudit vilebrequin (1),de préférence une position au point mort.

2. Amortisseur visqueux de vibrations de torsion ou dispositif anti-vibrateur visqueux selon la revendication 1, **caractérisé en ce que** lesdites bosses (6, 6a) sont formées par gaufrage dudit disque ventilateur (5) vers l'extérieur.

3. Amortisseur visqueux de vibrations de torsion ou dispositif anti-vibrateur visqueux selon la revendication 1, **caractérisé en ce que** lesdites bosses (6, 6a) sont formées par projection vers l'extérieur des parties poinçonnées du matériau dudit disque ventilateur (5).

4. Amortisseur visqueux de vibrations de torsion ou dispositif anti-vibrateur visqueux selon une quelconque des revendications précédentes, **caractérisé en ce que** ledit disque ventilateur (5) est fait en métal.

5. Amortisseur visqueux de vibrations de torsion ou dispositif anti-vibrateur visqueux selon ledit disque ventilateur (5) est fixé sur ledit carter (3) d'une manière à empêcher la torsion.

6. Amortisseur visqueux de vibrations de torsion ou dispositif anti-vibrateur visqueux selon une quelconque des revendications précédentes, **caractérisé en ce que** l'amortisseur visqueux de vibrations de torsion ou dispositif anti-vibrateur visqueux est apte à être relié, moyennant des éléments de connexion (9), audit vilebrequin seulement en une position très particulière.
